# EUROPEAN PATENT SPECIFICATION

(11) **EP 1 599 311 B1**
(45) Date of publication and mention of the grant of the patent: **07.10.2009**
(21) Application number: 04716396.9
(22) Date of filing: 02.03.2004
(51) Int. Cl.: B23K 9/23, B24B 19/16

(54) **AN APPARATUS FOR GRINDING A TUNGSTEN ELECTRODE FOR A TIG-WELDING HANDLE**
VORRICHTUNG ZUM SCHLEIFEN EINER WOLFRAMELEKTRODE FÜR EINEN WIG-SCHWEISSGRIFF
APPAREIL DE RECTIFICATION D'UNE ELECTRODE DE TUNGSTENE POUR UN MANCHE DE SOUDAGE TIG

(30) Priority: 04.03.2003 SE 0300563
(43) Date of publication of application: 30.11.2005
(73) Proprietor: Hall, Lars, 112 69 Stockholm (SE)
(72) Inventor: Hall, Lars, 112 69 Stockholm (SE)
(74) Representative: Janson, Ronny
(86) International application number: PCT/SE2004/000280
(87) International publication number: WO 2004/078403

(56) References cited:
- DE-C- 3 305 149
- US-A- 4 480 171
- DATABASE WPI Section k, Week 198547, Derwent Publications Ltd., London, GB; Class B23, AN 1985-292220, XP002991918 & JP 60 199 578 A (NITTO SEIKO KK) 09 October 1985

## Description

The invention relates to an apparatus for grinding a tungsten electrode for a TIG-welding handle, of the type described in the preamble to claim 1, see e.g. US-A- 4480171.

When performing TIG (Tungsten Inert Gas) welding, which is often used for welding stainless steel, the tip of the electrode needs to be sharpened from time to time, the operator may sometimes come into contact with the workpiece with the electrode tip so that the point is destroyed. The electrode tip is also eroded during operation by the electric arcs between the tip and the workpiece. It is thus necessary to frequently sharpen the point to conical shape, for instance, with a top angle of 25 degrees so that the electric arcs are controlled at the electrode tip.

When the operator considers that the electrode needs sharpening he/she removes it from the welding handle and manually grinds the front end of the electrode to a sharp point, after which the electrode is replaced in the welding handle. The dismantling and assembly are time consuming and sometimes difficult since the electrode becomes hot during use.

One object of the invention is therefore to provide a grinding unit that facilitates grinding the electrode tip while the electrode remains in the welding handle.

The known technology is represented by GB 1430041 illustrating a heavy welding unit of TIG type in which the welding electrode is carried by a pivotable holder to be swung between a working position and a re-grinding position, there being a grinding wheel close by the electrode tip in the grinding position. The welding unit carries the electrode via an electrode holder that is rotatably journalled and has a rotary motor enabling the electrode to rotate during the grinding.

The invention, however, relates to an apparatus for grinding an electrode for a manual TIG-welding handle.

The object is achieved by means of the invention.

The invention is defined in the appended independent claim.

Embodiments of the invention are defined in the appended sub-claims.

Basically the invention provides a grinding machine similar to a pencil-sharpener, which is placed inside a housing provided with an opening into which the free end of the electrode protruding from the welding handle can be inserted to correct alignment with the grinding wheel of the unit so that, upon activation, the grinding unit produces a sharp conical point on the tip of the electrode when this is inserted through the opening in the wall of the housing. A curtain of light or a pressure-sensitive member, for instance, may be arranged to sense that the electrode tip is inserted through the opening into the housing.

The grinding unit may comprise a support which is rotationally driven by a motor around an axis directed to the electrode tip which is inserted into the opening of the housing wall. On the support is a motor whose shaft carries a grinding rod that shapes the electrode tip. The motor axis of the grinding rod may intersect the axis of rotation of the support and form an acute angle therewith corresponding to half the desired top angle for the electrode tip. The motor may be carried by the support via a hinge allowing it to be swung in an axial plane to the axis of rotation of the support. The motor can thus swing towards an outer end position defining the desired shape of the electrode tip. The motor may also be pre-stressed to this shoulder by the compression spring that permits the motor to swing to an obtuse angle to the axis of rotation of the support and to give way when the electrode is inserted into the housing to make contact with the grinding wheel. During grinding the grinding wheel rotates, generally at a speed considerably higher than the speed of rotation of the support.

In embodiments the opening may comprise a guide for the end portion of the welding handle from which the electrode protrudes. The end portion of the welding handle is generally in the form of a section of ducting which carries inert gas to the welding area. The wall of the housing may then provide a guide for this portion of the handle so that the electrode is directed substantially coaxially to the axis of rotation of the support. The opening may possibly include a shoulder forming an axial stop for the end of the handle part from which the electrode protrudes.

In preparation for grinding the electrode tip the operator may possibly first adjust the length of the electrode protruding from the end of the welding handle.

The invention will be described in the following by way of example with reference to the accompanying drawings.
- Figure 1: shows schematically a section through an apparatus in accordance with the invention.
- Figure 2: shows another embodiment of the opening of the housing for receiving an end portion of a TIG-welding handle, from which the welding electrode protrudes.

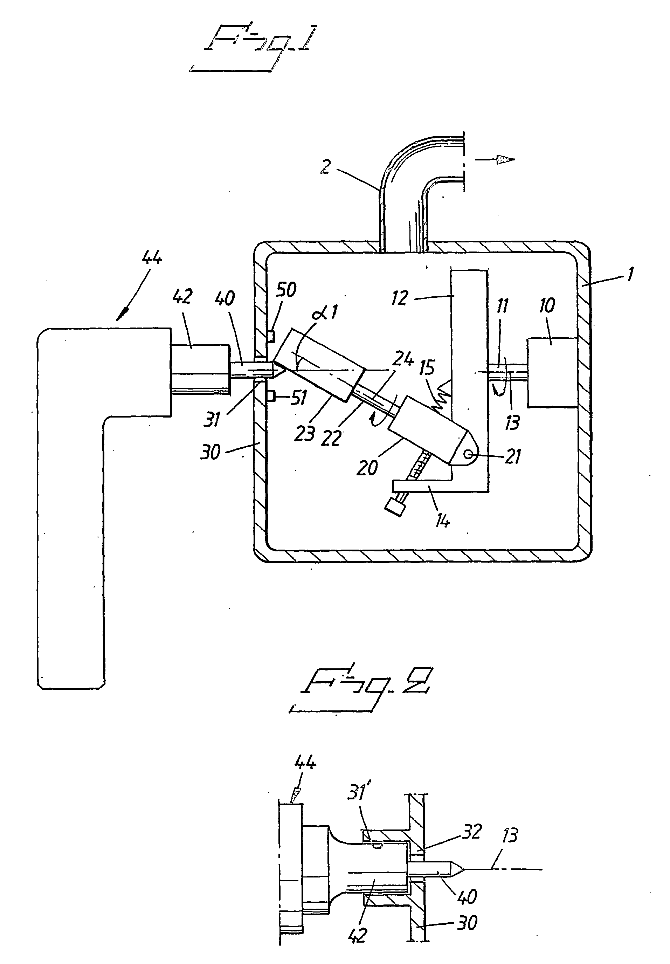

Figure 1 shows an apparatus housing 1 containing a motor whose out-going shaft 11 carries a support 12 rotatable about an axis 13. A grinding-rod motor 20 is pivotably journalled by a bearing on support 12 for oscillation in a plane containing the axis 13. The grinding-rod motor has an out-going shaft 22 carrying a grinding rod 23 for rotation about an axis 24. The support 12 is shown to have a shoulder 14 towards which the grinding-rod motor 20 is swung out by a compression spring 15 so that the axis 24 intersects and forms an angle α with the axis 13 when the grinding rod 23 is in proximity to a wall 30 of the housing wall 30 and an opening 31 therein, which is directed towards the axis 13. The configuration is such that a straight electrode 40 inserted through the opening 31 encounters the envelope surface of the grinding rod 23 in the vicinity of the free end of the rod 23 close to the wall 30 so that, when the electrode 40 is inserted through the opening 30 it can swing the motor 20 about its bearing 21 against the action of the compression spring 15. The shoulder 14 is shown adjustable in order to define an optional top angle for the electrode tip. The shoulder 14 may be formed by the end of a set screw fitted on the support 12, for instance, in a threaded opening therein.

The electrode 40 is normally held centred in a tubular end piece 42 forming an end portion of a TIG-welding handle for manual welding.

A light curtain in the form of an emitter 50 and a sensor 51 senses that the tip of the electrode 40 has entered the housing 1, and thus starts the motors 10, 20, whereupon the motor 20 usually rotates at considerably higher speed than the motor 10 while grinding a point at the end of the electrode 40.

In preparation for the grinding operation the operator can first adjust the welding handle so that the electrode 40 is pushed sufficiently far from the end section 42. Figure 2 shows an alternative embodiment in which the opening 31' is designed to form a guide for the end portion 42. Cooperation between the opening 31' and the outer surface of the tubular part 42 thus establishes a coaxial alignment of the electrode 40 to the axis 13. The opening 31' may possibly be provided with a shoulder 32 cooperating with the front end of the portion 42 so that, after grinding in the grinding unit, the electrode 40 is protruded a predetermined distance from the front end of part 42 of the welding handle.

It is also clear from Figure 1 that an evacuating pipe 2 is connected through the wall 30 of the apparatus housing, in order to evacuate dust and gases from the housing 1. The pipe 2 is connected to a suction source and preferably contains filter means (not shown).

## Claims

1. An apparatus for grinding a tungsten electrode (40) for a TIG-welding handle, comprising a grinding wheel (23) rotatable about a first axis (24) **characterised in that** the apparatus comprises a support (12) carrying the grinding wheel and being rotatable about a second axis (13), a housing surrounding the grinding device and having an opening (31, 31'), the free end of the electrode that protrudes from an end portion of the welding handle being insertable into the opening of the housing by means of the welding handle, **in that** the opening of the housing wall is aligned with the axis of rotation (13) of the support (12) and **in that** the grinding rod (23) is located in the vicinity of the opening (31, 31') through the wall (30) of the housing to form a generatrix to the desired pointed shape for the free end of the electrode.

2. An apparatus as claimed in claim 1, **characterised in that** the opening (31) through the wall of the housing has a diameter corresponding to the diameter of the electrode (40).

3. An apparatus as claimed in claim 2, **characterised in that** the opening (31) is arranged to direct the electrode (40) to coaxial alignment with the axis of rotation of the support.

4. An apparatus as claimed in any one of claims 1-3, **characterised in that** the opening has a part (31') that is arranged guidingly to receive the end portion (42) of the welding handle (44), from which the electrode (40) protrudes.

5. An apparatus as claimed claim 4, **characterised in that** a stop shoulder (32) is arranged at the guiding opening for the end portion (42) of the handle (44).

## Patentansprüche

1. Vorrichtung zum Schleifen einer Wolframelektrode (40) für einen WIG-Schweißgriff mit einem Schleifrad (23), das um eine erste Achse (24) drehbar ist, **dadurch gekennzeichnet, dass** die Vorrichtung einen Träger (12), der das Schleifrad trägt und um eine zweite Achse (13) drehbar ist, umfasst, wobei ein Gehäuse die Schleifvorrichtung umgibt und eine Öffnung (31, 31') aufweist, wobei das freie Ende der Elektrode, das von einem Endabschnitt des Schweißgriffs vorsteht, in die Öffnung des Gehäuses mittels des Schweißgriffs eingefügt werden kann, wobei die Öffnung der Gehäusewand auf die Drehachse (13) des Trägers (12) ausgerichtet ist und der Schleifstab (23) in der Nähe der Öffnung (31, 31') durch die Wand (30) des Gehäuses angeordnet ist, um eine Mantellinie für die gewünschte spitze Form für das freie Ende der Elektrode zu bilden.

2. Vorrichtung nach Anspruch 1, **dadurch gekennzeichnet, dass** die Öffnung (31) durch die Wand des Gehäuses einen Durchmesser aufweist, der dem Durchmesser der Elektrode (40) entspricht.

3. Vorrichtung nach Anspruch 2, **dadurch gekennzeichnet, dass** die Öffnung (31) so angeordnet ist, dass sie die Elektrode (40) in eine koaxiale Ausrichtung auf die Drehachse des Trägers richtet.

4. Vorrichtung nach einem der Ansprüche 1-3, **dadurch gekennzeichnet, dass** die Öffnung einen Teil (31') aufweist, der führend angeordnet ist, um den Endabschnitt (42) des Schweißgriffs (44), von dem die Elektrode (40) vorsteht, aufzunehmen.

5. Vorrichtung nach Anspruch 4, **dadurch gekennzeichnet, dass** eine Anschlagrandleiste (32) an der Führungsöffnung für den Endabschnitt (42) des Griffs (44) angeordnet ist.

## Revendications

1. Un dispositif pour façonner une électrode en tungstène (40) pour une poignée de soudage TIG, comprenant une meule (23) adaptée pour tourner autour d'un premier axe (24), **caractérisé en ce que** le dispositif comprend un support (12) portant la meule et étant adapté pour tourner autour d'un second axe, un boitier entourant la meule et ayant une ouverture (31,31'), l'extrémité libre de l'électrode qui fait sailli d'une extrémité de la poigné de soudage étant adapté pour être insérée dans l'ouverture du boitier au moyen de la poignée de soudage, l'ouverture dans la paroi du boitier étant alignée avec l'axe de rotation (13) du support (12) et la meule (23) étant disposé dans l'entourage de l'ouverture (31,31') à travers la paroi (30) du boitier afin de produire une génératrice à la forme pointue souhaitée de l'extrémité libre de l'électrode.

2. Un dispositif selon la revendication 1, **caractérisé en ce que** l'ouverture (31) à travers la paroi du boiter a un diamètre correspondant au diamètre de l'électrode (40).

3. Un dispositif selon la revendication 2, **caractérisé en ce que** l'ouverture (31) est disposée de façon à diriger l'électrode (40) à être co-axialement alignée avec l'axe de rotation du support.

4. Un dispositif selon une des revendications précédentes, **caractérisé en ce que** l'ouverture a une partie (31') qui est disposé de manière pilotant pour recevoir l'extrémité (42) de la poigné de soudage (44), à partir de laquelle l'électrode (40) fait saillie.

5. Un dispositif selon la revendication 4, **caractérisé en ce qu'** une buté (32) est disposé sur l'ouverture pilotant pour l'extrémité (42) de la poigné (44).
